# EUROPEAN PATENT APPLICATION

(11) **EP 4 742 505 A1**
(43) Date of publication of application: **13.05.2026**
(21) Application number: 24211467.6
(22) Date of filing: 07.11.2024
(51) Int. Cl.: H02K 3/28, H02K 15/0421, H02K 15/0643

(54) **MODULAR HAIRPIN WINDING AND STATOR STRUCTURE**

(71) Applicant: Fukuta Electric & Machinery Co., Ltd., Miaoli County 366003 (TW)
(72) Inventor: CHANG, Chin-Feng, 366003 Tongluo Township, Miaoli County (TW); CHU, Chih-Meng, 366003 Tongluo Township, Miaoli County (TW); CHEN, CHEN, 366003 Tongluo Township, Miaoli County (TW); CHANG, Chen-Hui, 366003 Tongluo Township, Miaoli County (TW)
(74) Representative: Straus, Alexander

(57) **Abstract**

A modular hairpin winding structure consists of four types of hairpin wires and two flat wire conductors forming at least one phase unit within a phase winding. Each phase unit is distributed along a portion of the stator core circumference and functions as an independent modular structure to simplify wiring design and reduce assembly complexity.

## Description

### FIELD OF INVENTION

The present disclosure relates to a hairpin winding layout, in particular a modular hairpin winding layout.

### BACKGROUND OF THE INVENTION

The stator of a three-phase induction motor contains three symmetrically distributed coil windings. When a three-phase alternating current is passed through these windings, a rotating magnetic field is generated at the same frequency as the alternating current, causing the rotor to rotate. In recent years, a type of copper wire known as hairpin winding wire has been increasingly used to form flat wire windings. The flat wire windings (also called rectangular wire windings) provide a higher current carrying capacity than conventional windings with circular wire cross-sections and are also advantageous for motor operation at high power densities and efficiencies due to their improved heat dissipation.

In the assembly of the hairpin windings, the multiple flat copper wires are initially bent sequentially into hairpin conductors. According to the wiring diagram, these hairpin conductors are radially stacked and arranged circumferentially in a ring shape. The open ends of these conductors are then inserted axially into slots of the stator core. Finally, the open ends of the hairpins are subjected to twisting, levelling, and welding processes to complete the formation of the flat wire windings.

Existing hairpin conductor units can be structurally categorized into Hairpin (or U-pin), I-pin, X-pin, and S-winding forms. Considering that the assembly of the hairpin winding wires involves complex processes and requires high precision, simplifying the winding method would significantly reduce the design complexity.

### SUMMARY OF THE INVENTION

The present disclosure provides a modular hairpin winding structure designed for installation in a stator core to form each phase winding of a three-phase winding system. Each phase winding includes at least one phase unit, and the modular hairpin winding comprises multiple flat wire conductors connected in series to form each phase unit.

The stator core includes a yoke and multiple teeth arranged circumferentially along the yoke to form N slots, each slot accommodating L+2 layers of the flat wire conductors. Where N is a multiple of 12, and both N and L are positive integers.

The flat wire conductors of each phase unit include a first hairpin winding wire, a second hairpin winding wire, a third hairpin winding wire, 2L fourth hairpin winding wires, and two additional conductors. Each of the first, second, third, and fourth hairpin winding wires comprises a crown portion, two extending segments extending from opposite ends of the crown portion, and two welding segments extending from the other ends of the extending segments.

The crown portion of the first hairpin winding wire spans six slot pitches, with its two extending segments arranged in the first layer of the slots.

The crown portion of the second hairpin winding wire spans seven slot pitches, with its two extending segments arranged in the (L+2)th layer of the slots.

The crown portion of the third hairpin winding wire spans five slot pitches, with its two extending segments arranged in the (L+2)th layer of the slots.

The crown portion of each fourth hairpin winding wire spans five slot pitches, with its two extending segments arranged across the second to (L+1)th layers of the slots, and the two extending segments of the same fourth hairpin winding wire spanning the adjacent layers within the slots.

Each of the two additional conductors has a connecting segment arranged in the first layer of the slot, each connecting segment extending outwardly to form a welding segment.

The two welding segments of the first hairpin winding wire are each connected to one welding segment of the two fourth hairpin winding wires in the second layer of the slot.

The welding segments of the two additional conductors are each connected to one welding segment of the two fourth hairpin winding wires in the second layer of the slot.

The two welding segments of the second hairpin winding wire are each connected to one welding segment of each adjacent fourth hairpin winding wire in the (L+1)th layer of the slot.

The two welding segments of the third hairpin winding wire are each connected to one welding segment of each adjacent fourth hairpin winding wire in the (L+1)th layer of the slot.

One welding segment in one of the remaining fourth hairpin wires is connected to one welding segment of another fourth hairpin winding, where the extending segment A1 of the latter is located in the adjacent layer within the same slot.

The conductor layout described enables the hairpin windings that form each phase unit to be distributed along only a portion of the circumference of the stator core, allowing each phase unit to function as a modular structure that simplifies wiring design and reduces assembly complexity.

Additionally, when the connecting segments of the two conductors are arranged in the slot n1 and the slot n1+6, respectively, where n1 is a positive integer, such that:

The two extending segments of the first hairpin winding wire are arranged in the slot n1+1 and the slot n1+7, respectively.

The two extending segments of the second hairpin winding wire are arranged in the slot n1+5 and the slot n1+12, respectively.

The two extending segments of the third hairpin winding wire are arranged in the slot n1+6 and the slot n1+11, respectively.

One of the extending segments of the fourth hairpin winding wire is located in the slot n1, the slot n1+1, the slot n1+6, or the slot n1+7.

Furthermore, the two welding segments of each fourth hairpin winding wire are bent toward its crown portion.

One of the welding segments of the first hairpin winding wire is bent toward its crown portion, while the other welding segment is bent away from its crown portion.

One of the welding segments of the second hairpin winding wire is bent toward its crown portion, while the other welding segment is bent away from its crown portion.

One of the welding segments of the third hairpin winding wire is bent toward its crown portion, while the other welding segment is bent away from its crown portion.

Each welding segment spans two and a half slot pitches from its crown portion.

The present disclosure also provides a stator structure that includes the aforementioned modular hairpin winding structure, which is configured to form at least one phase unit of any phase winding in a three-phase winding system.

### BRIEF DESCRIPTION OF THE DRAWINGS

FIGS. 1, 2, and 3 are perspective views of the partial stator structure of a three-phase motor.
FIGS. 4A, 4B, 4C, and 5 are schematic views of the hairpin conductor units.
FIGS. 6A and 6B are schematic views of conductors.
FIGS. 7A, 7B, 7C, and 7D are schematic views showing the connections of various conductors in one phase unit of the winding.
FIGS. 8A, 8B, and 8C are wiring diagrams of U-phase, V-phase, and W-phase windings, respectively.

### DETAILED DESCRIPTION OF THE PREFERRED EMBODIMENTS

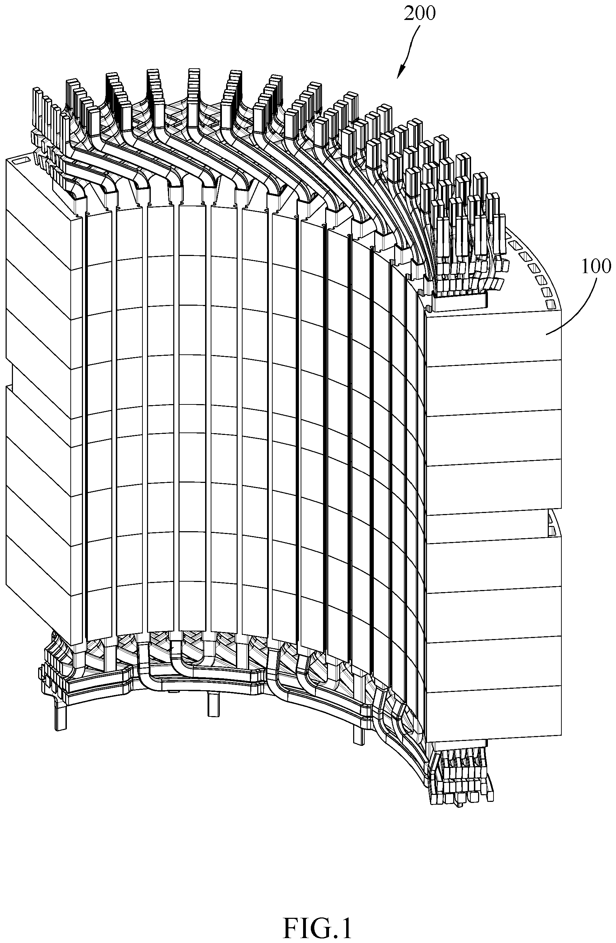

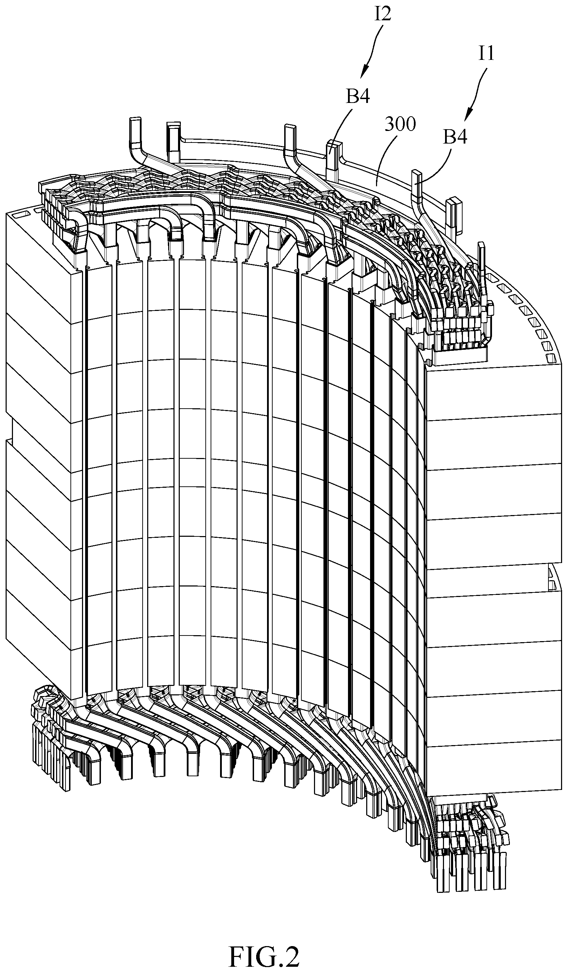

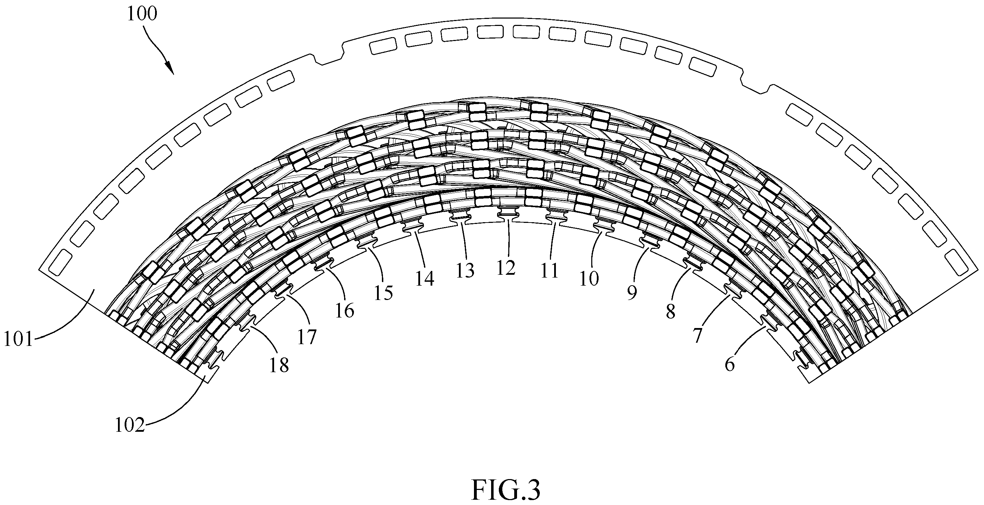

The motor structure according to the present disclosure comprises an inner rotor and an outer stator, and the entire stator structure is ring-shaped. However, in order to clearly illustrate the concepts of the present disclosure, only a portion of the stator structure is shown in this embodiment. Referring to FIGS. 1 to 3, which show the portion of the stator structure including a stator core 100 and hairpin windings 200.

The stator core 100 is formed by stacking multiple core units along the axial direction. Each core unit includes an annular yoke 101 and multiple teeth 102 arranged circumferentially along the yoke 101. Radially extending slots (6 to 18) are formed between adjacent pairs of teeth 102. The hairpin windings 200 include multiple flat wire conductors arranged axially and inserted into the slots of the stator core 100.

In this embodiment, the stator core 100 is constructed with N slots, each slot accommodating L+2 layers of the flat wire conductors, where N is a multiple of 12, and both N and L are positive integers.

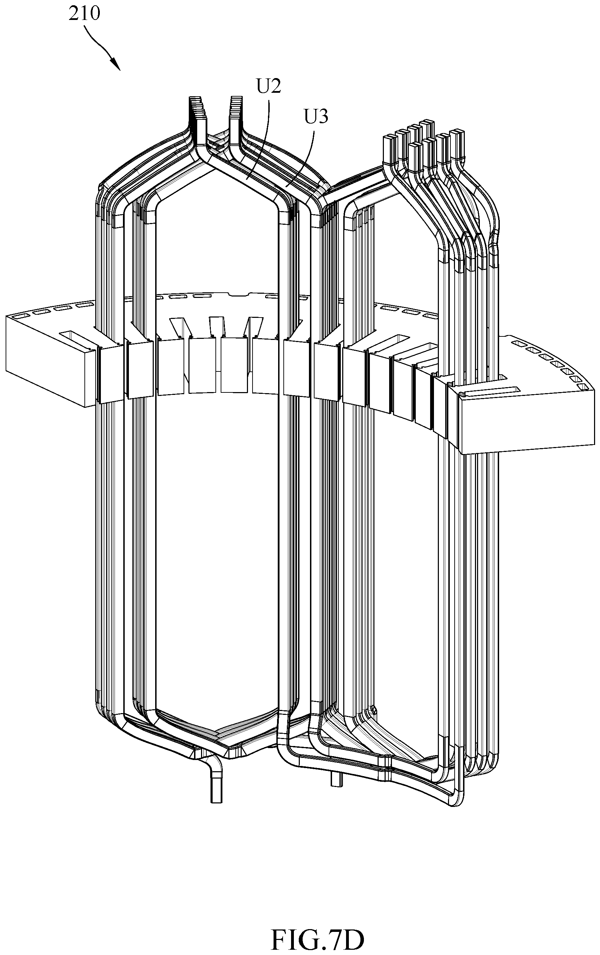

In this embodiment, the hairpin windings 200 form a first phase winding, a second phase winding, and a third phase winding of a three-phase winding system. Each phase winding includes at least one phase unit 210 (as shown in FIG. 7D). The phase units 210 of the first, second, and third phase windings are arranged periodically in sequence along the circumference of the stator core 100.

In this embodiment, each phase winding comprises the multiple phase units 210, arranged at equal angles along the circumference of the stator core 100. In one embodiment, these phase units 210 are parallel branches, while in another embodiment, the multiple phase units 210 of the same phase winding are connected in series via conductors. Welding segments B4 of the phase units 210 in the first, second, and third phase windings may be connected using a neutral bus line 300. In other embodiments, each phase winding may contain only one phase unit 210, with the three phase units 210 arranged at equal angles along the circumference of the stator core 100.

In this embodiment, each phase winding is composed of one or more identical phase units 210. The hairpin windings 200 within each phase unit 210 are distributed along only a portion of the circumference of the stator core 100, allowing each phase unit to function as a modular structure that simplifies wiring design and reduces assembly complexity.

The term 'span' (or 'slot pitch') as used herein refers to the distance between the two extending segments of the same conductor within the stator core, typically indicated by the number of the slots in the stator core. For example, if two extending segments are located in slot n0+1 and slot n0+6, where n0 is a positive integer, the distance between these extending segments is defined as 5 slot pitches.

The term 'crown portion' as used herein refers to the bent portion connecting the two extending segments of the same hairpin winding wire, without implying a specific crown-like shape; the said slot pitch measurement also defines the distance between the two ends of the crown portion.

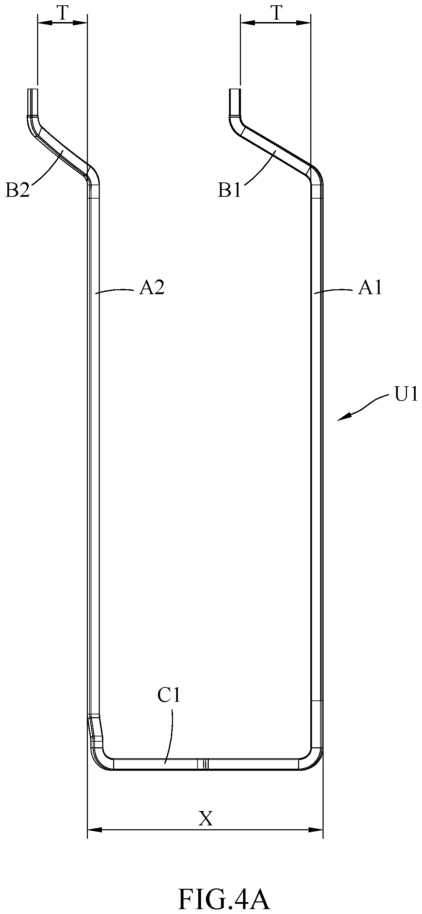

Referring to FIGS. 4A, 4B, 4C, 5, 6A, and 6B, which show the types of conductors used in each phase unit 210.

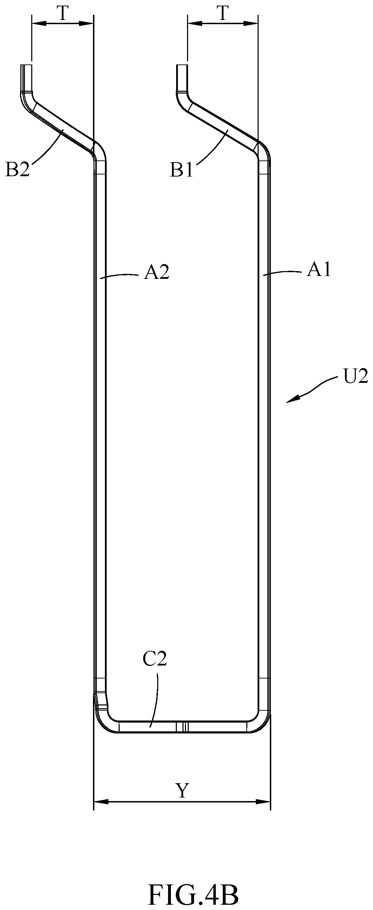

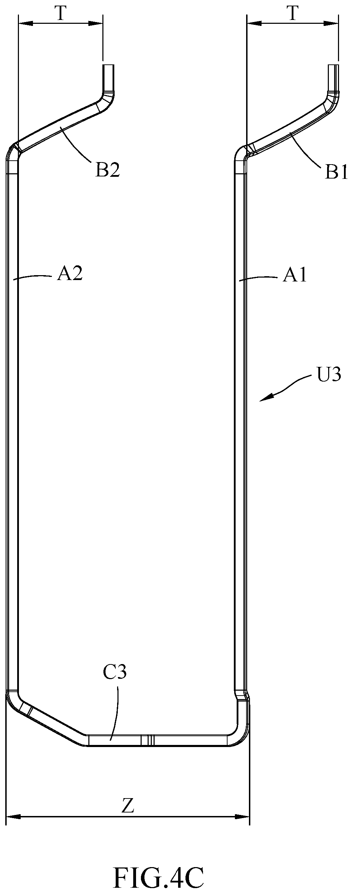

FIGS. 4A, 4B, and 4C respectively show a first hairpin winding wire U1, a second hairpin winding wire U2, and a third hairpin winding wire U3. Each hairpin winding wire has a crown portion C1, C2, or C3, two extending segments A1 and A2 extending from opposite ends of the crown portion, and two welding segments B 1 and B2 extending from the other ends of the extending segments A1 and A2. The extending segments A1 and A2 are inserted into the slots, while the welding segments B1 and B2 are connected to the welding segments B1 and B2 of the adjacent conductors to complete the circuit. For assembly alignment between the corresponding conductors, the welding segments B 1 and B2 of each conductor can be bent relative to their extending segments A1 and A2.

The crown portions C1, C2, and C3 of the first, second, and third hairpin winding wires U1, U2, and U3 span X, Y, and Z slot pitches, respectively, where X=7, Y=5, and Z=6.

One of the welding segments B1 (or B2) of the first, second, and third hairpin winding wires U1, U2, and U3 is bent toward its crown portion C1, C2, or C3, while the other welding segment B2 (or B1) is bent away from its crown portion C1, C2, or C3. In this embodiment, each welding segment spans a distance of T slot pitch(es) from its crown portion, where T=2.5.

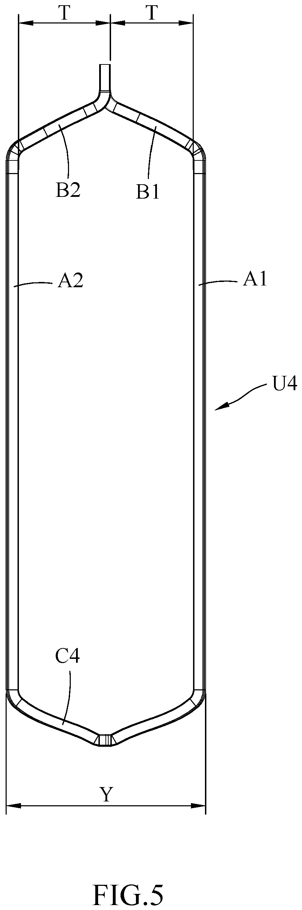

FIG. 5 shows the fourth hairpin winding wire U4, which also has the crown portion C4, the two extending segments A1 and A2, and the two welding segments B1 and B2. Unlike the previously described hairpin winding wires U1, U2, and U3, the crown portion C4 spans Y slot pitch(es), where Y=5. The two welding segments B1 and B2 are bent toward their crown portion C4, and the two extending segments A1 and A2 of the same fourth hairpin winding wire U4 span the adjacent layers within the slots. When the multiple fourth hairpin winding wires U4 are installed in the slots with the same slot number, all welding segments B1 and B2 of the fourth hairpin winding wires U4 are aligned in a straight line.

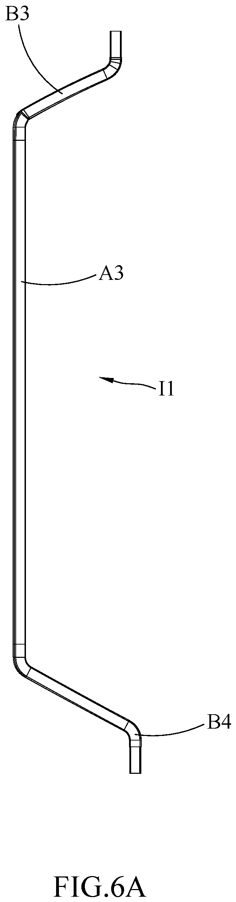

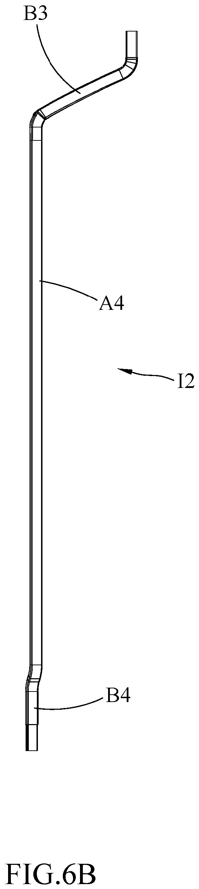

FIGS. 6A and 6B show conductors 11 and 12, respectively. Each has a connecting segment A3 (or A4) positioned in the slots, with each connecting segment A3 (or A4) extending outwardly at both ends to form welding segments B3 and B4. One welding segment B3 is adjacent to the welding segments B1 of the hairpin winding wires used to connect the adjacent conductors within the phase unit 210. The other welding segment B4 is adjacent to the crown portions C1, C2, and C3 of the hairpin winding wires and is used either to connect to another phase unit 210 of the same phase winding via external conductors or to connect phase units 210 of different phase windings via the neutral bus line 300.

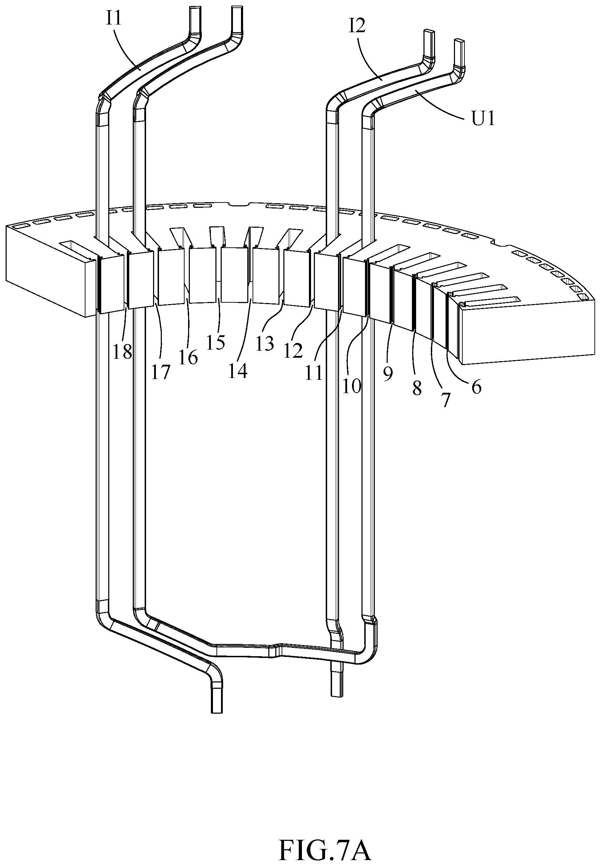

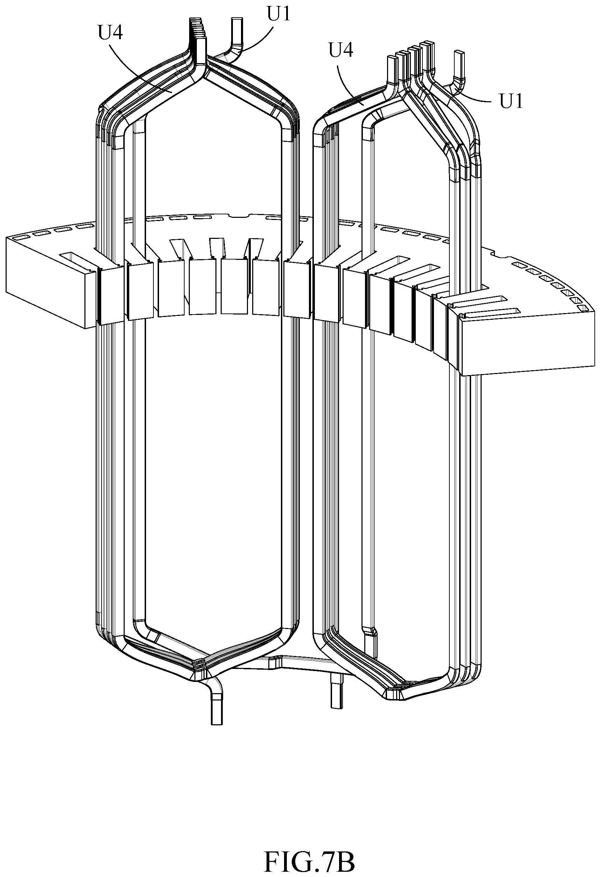

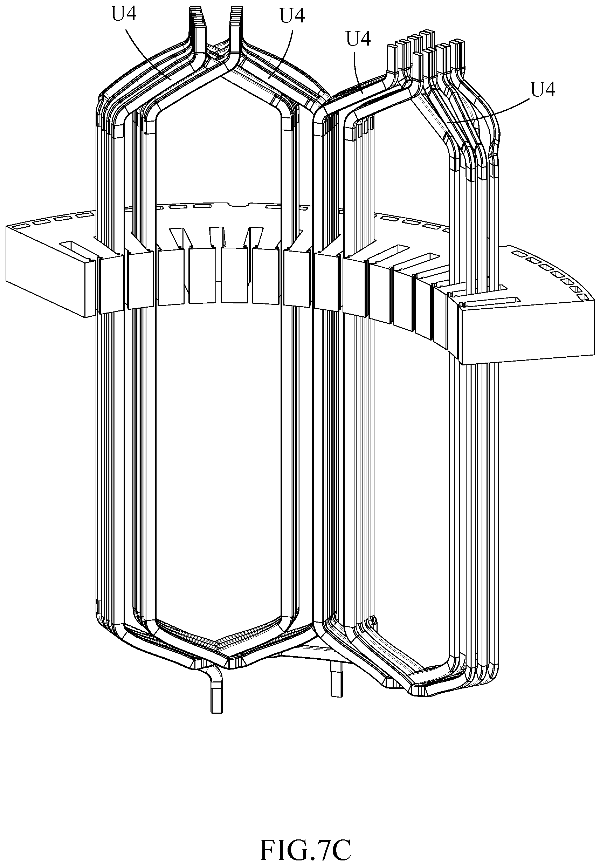

Referring also to FIGS. 7A, 7B, 7C, and 7D, in this embodiment, each phase unit 210 consists of one first hairpin winding wire U1, one second hairpin winding wire U2, one third hairpin winding wire U3, and 2L fourth hairpin winding wires U4, conductor I1, and conductor I2.

As shown in FIG. 7A, the two extending segments A1 and A2 of the first hairpin winding wire U1 are arranged in the first layer of the slots.

As shown in FIG. 7D, the two extending segments A1 and A2 of the second hairpin winding wire U2 are arranged in the (L+2)th layer of the slots.

As shown in FIG. 7D, the two extending segments A1 and A2 of the third hairpin winding wire U3 are arranged in the (L+2)th layer of the slots.

As shown in FIGS. 7B and 7C, the two extending segments A1 and A2 of the fourth hairpin winding wire U4 are arranged from the second layer up to the (L+1)th layer of the slots.

As shown in FIG. 7A, the connecting segments A3 and A4 of the conductors I1 and I2 are arranged in the first layer of the slots.

When the connecting segment A3 of the conductor I1 is arranged in the slot n1 and the connecting segment A4 of the conductor I2 is arranged in the slot n1+6, where n1 is a positive integer, then the connection configuration of the aforementioned conductors can be represented as follows:

The welding segment B 1 of the fourth hairpin winding wire U4, with one extending segment A1 located in the second layer of the slot n1, is connected to the welding segment B3 of the conductor I1.

The welding segment B 1 of the fourth hairpin winding wire U4, with one extending segment A1 located in the second layer of the slot n1+6, is connected to the welding segment B3 of the conductor I2.

When the two extending segments A1 and A2 of the first hairpin winding wire U1 are located in the slot n 1 + 1 and the slot n1+7, respectively:

The welding segment B 1 of the fourth hairpin winding wire U4, with one extending segment A1 located in the second layer of the slot n1+1, is connected to the welding segment B1 of the first hairpin winding wire U1.

The welding segment B1 of the fourth hairpin winding wire U4, with one extending segment A1 located in the second layer of the slot n1+7, is connected to the welding segment B2 of the first hairpin winding wire U1.

When the two extending segments A1 and A2 of the second hairpin winding wire U2 are arranged in the slot n1+5 and the slot n1+12, respectively:

The welding segment B2 of the fourth hairpin winding wire U4, with one extending segment A2 located in the (L+1)th layer of the slot n1+5, is connected to the welding segment B1 of the second hairpin winding wire U2.

The welding segment B2 of the fourth hairpin winding wire U4, with one extending segment A2 located in the (L+1)th layer of the slot n1+12, is connected to the welding segment B2 of the second hairpin winding wire U2.

When the two extending segments A1 and A2 of the third hairpin winding wire U3 are arranged in the slot n1+6 and the slot n1+11, respectively:

The welding segment B2 of the fourth hairpin winding wire U4, with one extending segment A2 located in the (L+1)th layer of the slot n1+6, is connected to the welding segment B1 of the third hairpin winding wire U3.

The welding segment B2 of the fourth hairpin winding wire U4, with one extending segment A2 located in the (L+1)th layer of the slot n 1 + 11, is connected to the welding segment B2 of the third hairpin winding wire U3.

The welding segment B2 in one of the remaining fourth hairpin wires U4 is connected to the welding segment B1 of another fourth hairpin wire U4, where the extending segment A1 of the latter is located in the adjacent layer of the same slot. In this manner, all the conductors are connected in series to form a single phase unit 210.

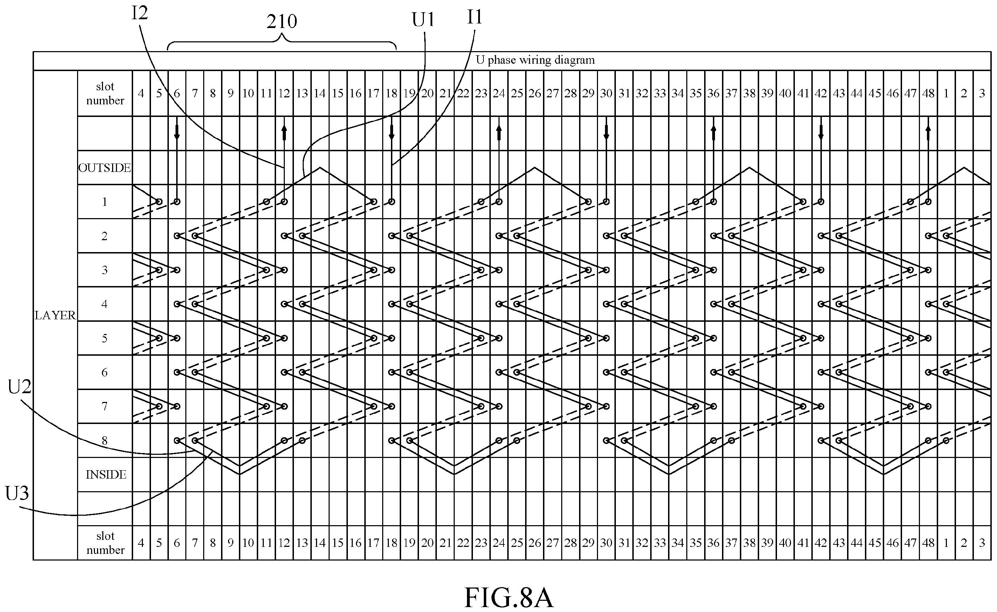

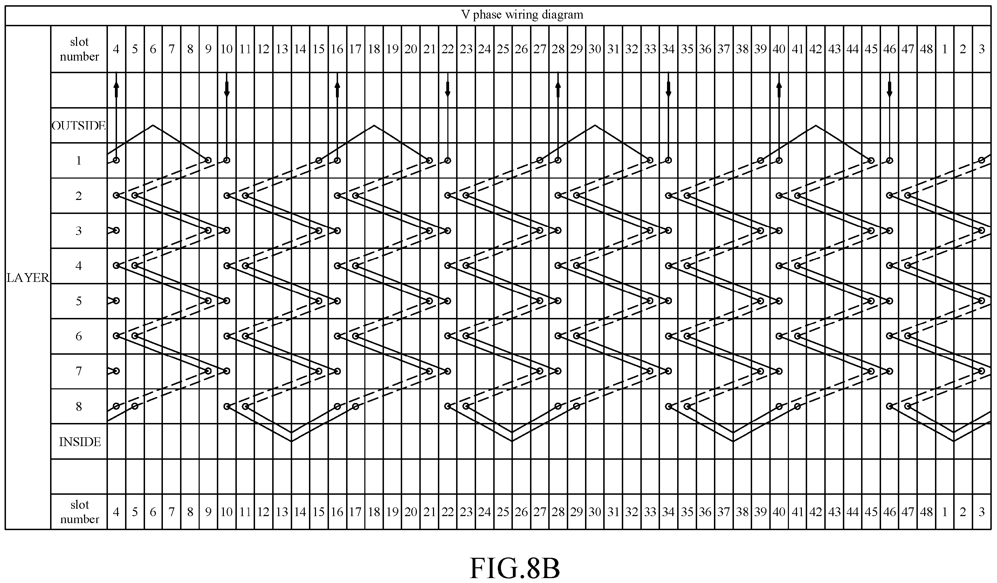

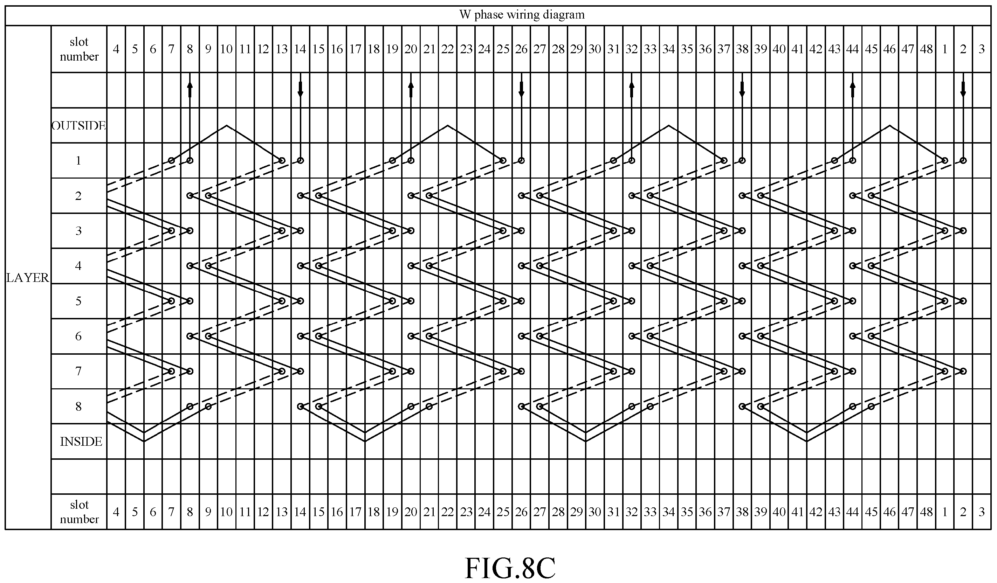

Referring to FIGS. 8A to 8C, the wiring diagrams of the U-phase, V-phase, and W-phase windings of a three-phase motor stator are shown based on the above embodiments. The wiring diagrams for the U-phase, V-phase, and W-phase windings are substantially identical, but are offset along the circumference of the stator core 100. Each phase unit 210 is connected in series to form the complete circuit around the stator core.

In this embodiment, each phase winding includes four phase units 210, and each slot accommodates eight layers of the extending segments, with N=48 and L=6.

Referring also to FIGS. 7A to 7D, the wiring configuration of the phase units 210 arranged in the slots 6 to 18 of the U-phase winding is used as an example to illustrate the wiring method of the phase units 210. In this example, solid lines represent the physical conductors, dashed lines represent the connection method for the welding segments, the connecting segment A3 of the conductor I1 is located in the first layer of the slot 18 as a current input terminal, and the connecting segment A4 of the conductor I2 is located in the first layer of the slot 12 as a current output terminal. The wiring method for each conductor based on its physical arrangement is as follows:

The extending segment A1 of the hairpin winding wire No. 1 is located in the second layer of the slot 13, and the extending segment A2 is located in the third layer of the slot 18.

The extending segment A1 of the hairpin winding wire No. 2 is located in the fourth layer of the slot 13, and the extending segment A2 is located in the fifth layer of the slot 18.

The extending segment A1 of the hairpin winding wire No. 3 is located in the sixth layer of the slot 13, and the extending segment A2 is located in the seventh layer of the slot 18.

The extending segment A1 of the hairpin winding wire No. 4 is located in the eighth layer of the slot 13, and the extending segment A2 is located in the eighth layer of the slot 6.

The extending segment A2 of the hairpin winding wire No. 5 is located in the seventh layer of the slot 11, and the extending segment A1 is located in the sixth layer of the slot 6.

The extending segment A2 of the hairpin winding wire No. 6 is located in the fifth layer of the slot 11, and the extending segment A1 is located in the fourth layer of the slot 6.

The extending segment A2 of the hairpin winding wire No. 7 is located in the third layer of the slot 11, and the extending segment A 1 is located in the second layer of the slot 6.

The extending segment A2 of the hairpin winding wire No. 8 is located in the first layer of the slot 11, and the extending segment A1 is located in the first layer of the slot 7.

The extending segment A1 of the hairpin winding wire No. 9 is located in the second layer of the slot 17, and the extending segment A2 is located in the third layer of the slot 12.

The extending segment A1 of the hairpin winding wire No. 10 is located in the fourth layer of the slot 17, and the extending segment A2 is located in the fifth layer of the slot 12.

The extending segment A1 of the hairpin No. 11 wire is located in the sixth layer of the slot 17, and the extending segment A2 is located in the seventh layer of the slot 12.

The extending segment A1 of the hairpin winding wire No. 12 is located in the eighth layer of the slot 12, and the extending segment A2 is located in the eighth layer of the slot 7.

The extending segment A2 of the hairpin winding wire No. 13 is located in the seventh layer of the slot 12, and the extending segment A1 is located in the sixth layer of the slot 7.

The extending segment A2 of the hairpin winding wire No. 14 is located in the fifth layer of the slot 12, and the extending segment A1 is located in the fourth layer of the slot 7.

The extending segment A2 of the hairpin winding wire No. 15 is located in the third layer of the slot 12, and the extending segment A1 is located in the second layer of the slot 7.

The connecting segment A4 of conductor I2 is located in the first layer of the slot 12 and serves as the current output terminal.

Among these, the hairpin winding wire No. 4 is identified as the second hairpin winding wire U2, the hairpin winding wire No. 8 as the first hairpin winding wire U1, the hairpin winding wire No. 12 as the third hairpin winding wire U3, and the remaining hairpin winding wires as the fourth hairpin winding wires U4.

In this embodiment, the first layer is positioned adjacent to the inner circumferential surface of the stator core, while the eighth layer is positioned adjacent to the outer circumferential surface of the stator core. However, the first and eighth layers can also be defined as the outer and inner circumferential surfaces of the stator core, respectively.

In other embodiments, the current input terminal and the current output terminal can be interchanged. The wiring direction may also be reversed from counterclockwise to clockwise.

## Claims

1. A modular hairpin winding designed for installation within a stator core (100) to form each phase winding of a three-phase winding system, wherein each phase winding includes at least one phase unit (210), and the modular hairpin winding comprises multiple flat wire conductors connected in series to form each phase unit (210); wherein,
the stator core (100) includes a yoke (101) and multiple teeth (102) arranged circumferentially along the yoke (101) to form N slots, each slot accommodating L+2 layers of the flat wire conductors, where N is a multiple of 12, and both N and L are positive integers; **characterized in that**,
the flat wire conductors of each phase unit (210) comprise one first hairpin winding wire (U1), one second hairpin winding wire (U2), one third hairpin winding wire (U3), 2L fourth hairpin winding wires (U4), and two additional conductors (I1,I2), each of the first, second, third, and fourth hairpin winding wires comprising a crown portion (C1,C2,C3,C4), two extending segments (A1,A2) extending from opposite ends of the crown portion (C1,C2,C3,C4), and two welding segments (B1,B2) extending from the other ends of the extending segments (A1,A2);
the crown portion (C1) of the first hairpin winding (U1) wire spans six slot pitches, with its two extending segments (A1,A2) arranged in the first layer of the slots,
the crown portion (C2) of the second hairpin winding wire (U2) spans seven slot pitches, with its two extending segments (A1,A2) arranged in the (L+2)th layer of the slots,
the crown portion (C3) of the third hairpin winding wire (U3) spans five slot pitches, with its two extending segments (A1,A2) arranged in the (L+2)th layer of the slots,
the crown portion (C4) of each fourth hairpin winding wire (U4) spans five slot pitches, with its two extending segments (A1,A2) arranged across the second to (L+1)th layers of the slots, and the two extending segments (A1,A2) of the same fourth hairpin winding wire (U4) spanning the adjacent layers within the slots, and
each of the two additional conductors (I1,I2) includes a connecting segment (A3,A4) arranged in the first layer of the slot, with each connecting segment (A3,A4) extending outwardly to form a welding segment (B3,B4); wherein,
the two welding segments (A1,A2) of the first hairpin winding wire (U1) are each connected to one welding segment (B 1,B2) of the two fourth hairpin winding wires (U4) in the second layer of the slot,
the welding segments (B3,B4) of the two additional conductors (I1,I2) are each connected to one welding segment (B 1,B2) of the two fourth hairpin winding wires (U4) in the second layer of the slot,
the two welding segments (B1,B2) of the second hairpin winding wire (U2) are each connected to one welding segment (B1,B2) of the adjacent fourth hairpin winding wire (U4) in the (L+1)th layer of the slot,
the two welding segments (B1,B2) of the third hairpin winding wire (U3) are each connected to one welding segment (B1,B2) of the adjacent fourth hairpin winding wire (U4) in the (L+1)th layer of the slot, and
one welding segment (B1) in one of the remaining fourth hairpin wires (U4) is connected to one welding segment (B2) of another fourth hairpin wire (U4), where the extending segment (A1,A2) of the latter is located in the adjacent layer within the same slot.

2. The modular hairpin winding according to Claim 1, wherein,
the connecting segments (A3,A4) of the two conductors (I1,I2) are arranged in the slot n1 and the slot n1+6, respectively, where n1 is a positive integer, such that:
the two extending segments (A1,A2) of the first hairpin winding wire (U1) are arranged in the slot n1+1 and the slot n 1 + 7, respectively,
the two extending segments (A1,A2) of the second hairpin winding wire (U2) are arranged in the slot n1+5 and the slot n1+12, respectively,
the two extending segments (A1,A2) of the third hairpin winding wire (U3) are arranged in the slot n1+6 and the slot n1+11, respectively, and
one of the extending segments (A1,A2) of the fourth hairpin winding wire (U4) is located in the slot n1, the slot n 1 + 1, the slot n1+6, or the slot n 1 + 7.

3. The modular hairpin winding according to Claim 1, wherein,
the two welding segments (B1,B2) of each fourth hairpin winding wire (U4) are bent toward its crown portion (C4),
one of the welding segments (B1) of the first hairpin winding wire (U1) is bent toward its crown portion, while the other welding segment (B2) is bent away from its crown portion (C1),
one of the welding segments (B1) of the second hairpin winding wire (U2) is bent toward its crown portion, while the other welding segment (B2) is bent away from its crown portion (C2),
one of the welding segments (B1) of the third hairpin winding wire (U3) is bent toward its crown portion, while the other welding segment (B2) is bent away from its crown portion (C3), and
each welding segment spans two and a half slot pitches from its crown portion.

4. A stator structure, comprising the modular hairpin winding according to any one of Claims 1 to 3, configured to form at least one phase unit (210) of any phase winding in a three-phase winding system.

## Amended claims

### Amended claims in accordance with Rule 137(2) EPC.

1. A modular hairpin winding designed for installation within a stator core (100) to form each phase winding of a three-phase winding system, wherein each phase winding includes at least one phase unit (210), and the modular hairpin winding comprises multiple flat wire conductors connected in series to form each phase unit (210); wherein,
the stator core (100) includes a yoke (101) and multiple teeth (102) arranged circumferentially along the yoke (101) to form N slots, each slot accommodating L+2 layers of the flat wire conductors, where N is a multiple of 12, and both N and L are positive integers; **characterized in that**,
the flat wire conductors of each phase unit (210) comprise one first hairpin winding wire (U1), one second hairpin winding wire (U2), one third hairpin winding wire (U3), 2L fourth hairpin winding wires (U4), and two additional conductors (11,12), each of the first, second, third, and fourth hairpin winding wires comprising a crown portion (C1,C2,C3,C4), two extending segments (A1,A2) extending from opposite ends of the crown portion (C1,C2,C3,C4), and two welding segments (B1,B2) extending from the other ends of the extending segments (A1,A2);
the crown portion (C 1) of the first hairpin winding (U1) wire spans six slot pitches, with its two extending segments (A1,A2) arranged in the first layer of the slots,
the crown portion (C2) of the second hairpin winding wire (U2) spans seven slot pitches, with its two extending segments (A1,A2) arranged in the (L+2)th layer of the slots,
the crown portion (C3) of the third hairpin winding wire (U3) spans five slot pitches, with its two extending segments (A1,A2) arranged in the (L+2)th layer of the slots,
the crown portion (C4) of each fourth hairpin winding wire (U4) spans five slot pitches, with its two extending segments (A1,A2) arranged across the second to (L+1)th layers of the slots, and the two extending segments (A1,A2) of the same fourth hairpin winding wire (U4) spanning the adjacent layers within the slots, and
each of the two additional conductors (I1,I2) includes a connecting segment (A3,A4) arranged in the first layer of the slot, with each connecting segment (A3,A4) extending outwardly to form a welding segment (B3,B4); wherein,
the two welding segments (A1,A2) of the first hairpin winding wire (U1) are each connected to one welding segment (B1,B2) of the two fourth hairpin winding wires (U4) in the second layer of the slot,
one of the welding segments (B3) of the two additional conductors (11,12) are each connected to one welding segment (B1,B2) of the two fourth hairpin winding wires (U4) in the second layer of the slot,
the two welding segments (B1,B2) of the second hairpin winding wire (U2) are each connected to one welding segment (B1,B2) of the adjacent fourth hairpin winding wire (U4) in the (L+1)th layer of the slot,
the two welding segments (B1,B2) of the third hairpin winding wire (U3) are each connected to one welding segment (B1,B2) of the adjacent fourth hairpin winding wire (U4) in the (L+1)th layer of the slot, and
one welding segment (B1) in one of the remaining fourth hairpin wires (U4) is connected to one welding segment (B2) of another fourth hairpin wire (U4) , where the extending segment (A1,A2) of the latter is located in the adjacent layer within the same slot;
wherein, the other of the welding segment (B4) of the two additional conductors (I1, I2) is adjacent to the crown portions (C1, C2, and C3) of the hairpin winding wires, and is used either to connect to another phase unit (210) of the same phase winding via external conductors or to connect phase units (210) of different phase windings via the neutral bus line (300);
wherein, the phase units (210) of the first, second, and third phase windings are arranged periodically in sequence along only a portion of the circumference of the stator core (100).

2. The modular hairpin winding according to Claim 1, wherein,
the connecting segments (A3,A4) of the two conductors (11,12) are arranged in the slot n1 and the slot n1+6, respectively, where n1 is a positive integer, such that:
the two extending segments (A1,A2) of the first hairpin winding wire (U1) are arranged in the slot n1+1 and the slot n1+7, respectively,
the two extending segments (A1,A2) of the second hairpin winding wire (U2) are arranged in the slot n1+5 and the slot n1+12, respectively,
the two extending segments (A1,A2) of the third hairpin winding wire (U3) are arranged in the slot n1+6 and the slot n1+11, respectively, and
one of the extending segments (A1,A2) of the fourth hairpin winding wire (U4) is located in the slot n1, the slot n1+1, the slot n1+6, or the slot n1+7.

3. The modular hairpin winding according to Claim 1, wherein,
the two welding segments (B1,B2) of each fourth hairpin winding wire (U4) are bent toward its crown portion (C4),
one of the welding segments (B1) of the first hairpin winding wire (U1) is bent toward its crown portion, while the other welding segment (B2) is bent away from its crown portion (C1),
one of the welding segments (B1) of the second hairpin winding wire (U2) is bent toward its crown portion, while the other welding segment (B2) is bent away from its crown portion (C2),
one of the welding segments (B1) of the third hairpin winding wire (U3) is bent toward its crown portion, while the other welding segment (B2) is bent away from its crown portion (C3), and
each welding segment spans two and a half slot pitches from its crown portion.

4. A stator structure, comprising the modular hairpin winding according to any one of Claims 1 to 3, configured to form at least one phase unit (210) of any phase winding in a three-phase winding system.
